# FASCICULE DE BREVET EUROPEEN

(11) **EP 0 984 263 B1**
(45) Date de publication et mention de la délivrance du brevet: **03.09.2003**
(21) Numéro de dépôt: 99401810.9
(22) Date de dépôt: 19.07.1999
(51) Int. Cl.: G01N 1/28, G01N 1/31

(54) **Dispositif pour la préparation automatique d'étalements sanguins sur des lames**
Vorrichtung zur automatischen Vorbereitung von Blutabstrichen auf Objekträgern
Device for automatic preparation of blood smears on slides

(30) Priorité: 01.09.1998 FR 9810910
(43) Date de publication de la demande: 08.03.2000
(73) Titulaire: A B X, 34184 Montpellier Cedex 4 (FR)
(72) Inventeur: Lefevre, Didier, 34980 Saint Clement de Riviere (FR); Morel, Ghislain, 42300 Roanne (FR); Champseix, Henri, 34980 Montferrier sur Lez (FR); Champseix, Serge, 19170 Tarnac (FR); Le Comte, Roger, 34470 Perols (FR)
(74) Mandataire: Bezault, Jean

(56) Documents cités:
- EP-A- 0 323 130
- EP-A- 0 735 358
- EP-A- 0 740 142
- WO-A-97/26541
- WO-A-97/39348
- US-A- 4 027 623
- US-A- 4 034 700
- US-A- 5 676 910

## Description

L'invention se rapporte au domaine des analyses hématologiques et plus particulièrement à la préparation d'étalements sanguins sur des lames.

Dans ce domaine particulier, il est connu de déposer une goutte d'un échantillon sanguin sur une lame, telle qu'une lame de verre pour analyse au microscope, et d'étaler cette goutte sur la lame pour produire ce que l'on appelle un étalement sanguin. Ce dernier est ensuite séché puis coloré par au moins un réactif approprié pour permettre une analyse ultérieure au microscope. En effet, l'analyse de telles lames permet de déterminer la composition de l'échantillon sanguin considéré, ce qui s'avère d'une grande importance pour le diagnostic de certaines pathologies.

La préparation d'étalements sanguins de ce genre peut s'effectuer par des dispositifs automatisés qui, en partant d'un stock de lames neuves, réalisent une multiplicité de dépôts et d'étalements sanguins sur des lames et différents traitements ultérieurs comme le séchage et la coloration. Les lames ainsi traitées sont ensuite recueillies dans des bacs appropriés.

On connaît déjà, en particulier d'après les publications US 4 034 700, EP 0 735 358 et WO 97/18457, des dispositifs de ce type.

Cependant, la préparation automatique de telles lames pose différents problèmes notamment en ce qui concerne l'étalement sanguin qui doit être parfaitement maîtrisé afin d'obtenir une répartition uniforme des cellules sur la lame, et cela quelle que soit la quantité de cellules présentes dans le sang.

Il est nécessaire également que ces étalements s'effectuent sans risque de contamination à partir d'un étalement précédent.

Un autre problème est lié à la manipulation des lames elles-mêmes qui sont constituées de fines plaques de verre, relativement fragiles, qui ont en outre l'inconvénient d'avoir une tendance naturelle à coller les unes aux autres lorsqu'elles sont neuves et disposées en piles.

Encore un autre problème est lié à l'utilisation de produits toxiques pour effectuer les opérations de coloration des lames à partir de flacons de réactifs, et également des opérations de rinçage effectuées par des solvants. Il est donc indispensable de pouvoir empêcher la migration de vapeurs toxiques.

Tous ces problèmes et d'autres n'ont pas encore été résolus de façon satisfaisante par les dispositifs de préparation d'étalements sanguins connus dans la technique antérieure.

L'invention a notamment pour but de résoudre les problèmes mentionnés ci-dessus.

Elle propose à cet effet un dispositif pour la préparation automatique d'étalements sanguins sur des lames, lequel comprend :
- un poste de stockage propre à stocker des lames neuves disposées horizontalement et superposées en une pile verticale ;
- un organe extracteur propre à extraire une lame de la pile et comprenant un poussoir déplaçable dans une direction d'extraction choisie et propre à agir sur la lame se situant en bas de la pile en vue de son transfert vers un poste de dépôt, le poussoir étant réalisé sous la forme d'un couteau propre à agir sur un bord longitudinal de la lame de sorte que ce bord fasse un angle aigu par rapport à la normale à la direction d'extraction, ledit angle aigu ayant avantageusement une valeur comprise entre 1 et 30° ;
- un poste de dépôt propre à déposer une goutte de sang sur une lame extraite de la pile ;
- un poste d'étalement propre à étaler la goutte de sang dans des conditions contrôlées pour produire un étalement sanguin de répartition uniforme ;
- un poste de marquage comportant une tête de marquage propre à apposer des moyens d'identification sur une zone réservée de la lame ;
- un poste de séchage propre à sécher l'étalement sanguin ;
- un poste de coloration propre à colorer l'étalement sanguin ;
- un poste de sortie pour évacuer la lame ainsi colorée ; et
- des moyens de transfert propres à déplacer la lame entre les postes précités selon un trajet défini.

Le dispositif de l'invention permet ainsi d'effectuer les différentes opérations requises grâce à des postes spécifiques auxquels la lame parvient successivement grâce aux moyens de transfert. Au niveau de ces postes, la lame subit une opération particulière dans des conditions parfaitement maîtrisées.

En particulier, l'organe extracteur permet d'extraire une lame de la pile du poste de stockage en s'affranchissant des problèmes de collage mentionnés précédemment.

Egalement, le poste d'étalement étale la goutte de sang dans des conditions contrôlées ce qui permet de produire un étalement sanguin présentant une répartition uniforme.

Dans un mode de réalisation préféré de l'invention, le poste d'étalement comprend une contre-forme propre à être appliquée contre la face de la lame sur laquelle la goutte de sang a été déposée en formant un angle pré-réglé, des moyens pour imposer un déplacement relatif en translation entre la lame et la contre-forme afin de produire un étalement sanguin d'épaisseur contrôlé, et cette contre-forme est revêtue d'un ruban souple en matière plastique supporté par des moyens d'enroulement et de déroulement en sorte que ledit ruban présente une partie en contact avec le sang qui est déplacé entre deux étalements successifs, ce qui permet d'éviter tout risque de contamination.

Ces moyens d'enroulement et de déroulement comprennent avantageusement une première bobine de laquelle se déroule le ruban neuf et une deuxième bobine sur laquelle s'enroule le ruban souillé par le sang, ces bobines étant de préférence contenues dans une cassette.

Le poste d'étalement comprend avantageusement un organe de mesure propre à mesurer la transmission optique de la goutte de sang déposée sur la lame afin de déduire une valeur mesurée utilisable pour ajuster la vitesse de l'étalement, et donc son épaisseur.

L'organe de mesure précité comprend avantageusement une diode électro-luminescente et une photo-diode disposées de part et d'autre de la lame à l'emplacement de la goutte de sang.

Dans une forme de réalisation préférée de l'invention, le poste de coloration comprend un plateau tournant monté rotatif autour d'un axe vertical et muni d'une pluralité de puits répartis en circonférence et propres à recevoir chacun une lame en position verticale, des moyens propres à assurer une rotation angulaire du plateau de puits en puits de manière séquentielle, ainsi que des moyens de remplissage et de vidange pour remplir un puits d'un liquide de traitement et le vider ensuite de son contenu.

Ces moyens de remplissage et de vidange comprennent avantageusement au moins deux aiguilles plongeuses portées par un support déplaçable en translation, parallèlement à l'axe de rotation du plateau tournant, entre une position haute où les aiguilles sont sorties du puits et une position basse où les aiguilles sont plongées dans le puits.

Selon une caractéristique avantageuse de l'invention, dans la position où une lame est reçue dans un puits, les moyens d'identification de la lame sont disposés en partie supérieure de manière à sortir du liquide contenu dans le puits.

Selon encore une autre caractéristique avantageuse de l'invention, le poste de coloration comprend une enceinte close contenant le plateau tournant et les puits.

Dans une forme de réalisation préférée de l'invention, le poste de sortie comprend des moyens de stockage et de déplacement propres à stocker et faire avancer des paniers vides susceptibles de recevoir des lames en sortie du poste de coloration.

Dans une forme de réalisation préférée de l'invention, les moyens de transfert comprennent un chariot propre à déplacer les lames une par une en position horizontale depuis le poste de stockage jusqu'au poste de séchage.

De plus, ces moyens de transfert comprennent avantageusement un basculeur placé près du poste de séchage et propre à amener la lame en position verticale.

Avantageusement, les moyens de transfert comprennent en outre une potence de manutention propre à déplacer une lame en position verticale entre le poste de séchage, le poste de coloration et le poste de sortie, la potence comprenant un support fixe, une poutre horizontale déplaçable verticalement par rapport au support fixe, un coulisseau déplaçable en translation le long de la poutre et une pince commandée portée par le coulisseau et propre à saisir une lame et à la relâcher ensuite pour la déplacer d'un poste à un autre.

Dans la description qui suit, faite seulement à titre d'exemple, on se réfère aux dessins annexés, sur lesquels :
- la figure 1 est une vue schématique en perspective d'un dispositif selon l'invention ;
- la figure 2 est une vue de dessus du dispositif de la figure 1 ;
- la figure 3 est une vue de dessus du poste de stockage et de l'organe extracteur ;
- la figure 4 est un schéma montrant le mode d'action de l'organe extracteur ;
- la figure 5 montre une sonde faisant partie du poste de dépôt et déposant une goutte de sang sur une lame portée par un chariot ;
- la figure 6 montre un organe de mesure de transmission optique associé au poste d'étalement ;
- la figure 7 représente un outil du poste d'étalement ;
- la figure 8 montre un basculeur du poste de séchage et de basculement ;
- la figure 9 est une vue en coupe verticale du poste de coloration ;
- la figure 10 montre schématiquement les différents trajets de la potence de manutention ; et
- la figure 11 est une vue schématique en élévation de la potence de manutention.

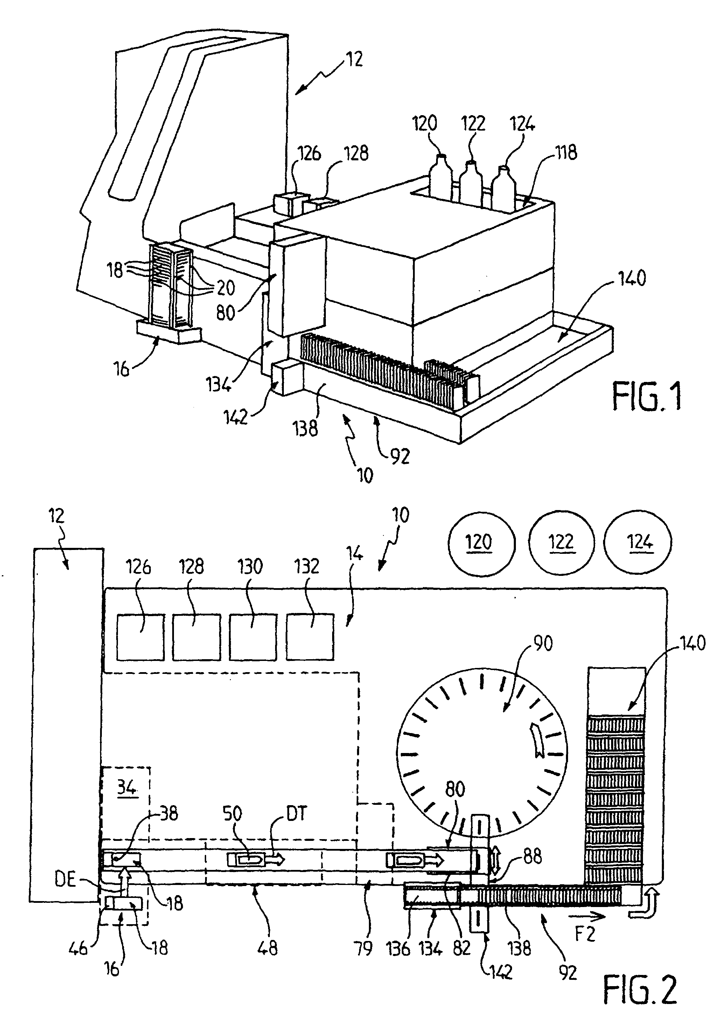

On se réfère tout d'abord aux figures 1 et 2 qui représentent un dispositif 10 pour la préparation d'étalements sanguins selon l'invention. Ce dispositif est, dans l'exemple, combiné à un appareil 12 qui réalise en parallèle des hémogrammes. Dans l'exemple, l'appareil 12 est du type ABX VÉGA, commercialisé par la Société française ABX.

Le dispositif 10 comprend une platine rectangulaire 14 qui supporte différents postes et tout d'abord un poste 16 pour le stockage de lames neuves 18. Ces lames sont des plaques rectangulaires en verre qui sont disposées horizontalement et superposées en une pile verticale en étant maintenues entre des colonnes 20 (figure 1). Cette disposition autorise le réapprovisionnement en cours de fonctionnement, puisqu'il suffit à l'opérateur de placer de nouvelles lames au-dessus de la pile.

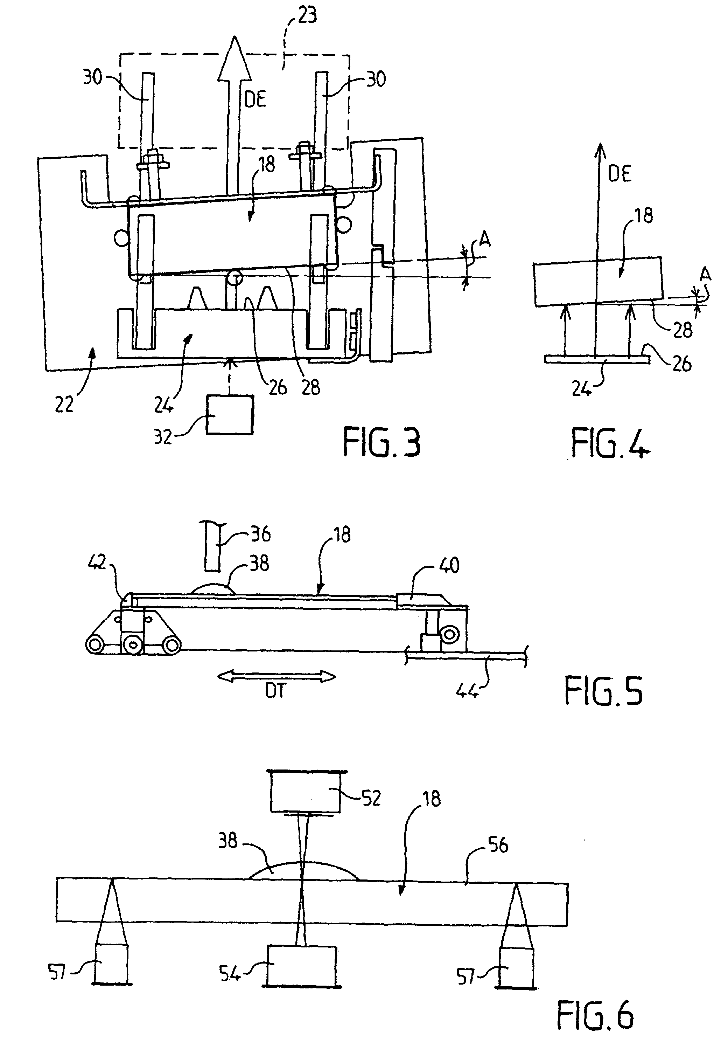

Le dispositif de l'invention comprend en outre un organe extracteur 22 (figure 3) qui est prévu pour extraire la lame qui se situe en bas de la pile pour l'amener sur un chariot 24 (représenté schématiquement sur la figure 3), qui véhicule ensuite la lame vers d'autres postes que comporte le dispositif de l'invention.

L'extraction d'une lame est toujours délicate à réaliser étant donné que les lames ont tendance à coller entre elles ce qui génère souvent de nombreux arrêts dans les dispositifs automatiques de la technique antérieure.

Pour résoudre cette difficulté, l'invention prévoit que l'organe extracteur 22 comprend un poussoir 24 qui est déplaçable dans une direction d'extraction DE comme représenté par une flèche sur les figures 2, 3 et 4. Le poussoir 24 est réalisé sous la forme d'un couteau horizontal dont l'épaisseur est inférieure à celle de la lame à extraire. Ce couteau comprend un bord longitudinal 26, encore appelé bord frontal, qui est propre à venir agir sur un bord longitudinal 28 de la lame 18. Ce qui constitue une caractéristique de l'invention, c'est que la direction d'extraction DE n'est pas perpendiculaire au bord 28 de la lame. En effet, comme on peut le voir sur les figures 3 et 4, le bord longitudinal 28 forme un angle aigu A par rapport à la normale N à la direction d'extraction DE. La valeur de l'angle A est avantageusement comprise entre 1 et 30°. Dans l'exemple, cet angle est de 3°, si bien que le bord longitudinal 28 de la lame fait un angle de 93° par rapport à la direction d'extraction DE.

Il a été constaté que le fait d'implanter la pile de lames avec un tel décalage angulaire permet un décollage plus efficace des lames et limite les blocages ou ralentissements dûs aux collages de lames. Un essai a permis de démontrer que la puissance moyenne nécessaire au décollage de deux lames par traction à 90° est d'environ 15 Newton, alors que la traction à 93° ne nécessite que 5 Newton.

Le poussoir 24 est guidé en translation par des tiges 30 (figure 3) et son déplacement est obtenu avantageusement par un ensemble 32, représenté schématiquement sur la figure 3, comprenant un moteur pas à pas et une vis à bille.

Une fois la lame parvenue sur le chariot 23, elle se trouve au niveau du poste suivant de l'installation, à savoir le poste de dépôt 34 (figure 2). Au niveau du poste 34 est prévue une sonde 36 (voir figure 5) qui, dans l'exemple, fait partie de l'appareil 12 mais qui, en variante, pourrait faire partie du dispositif 10 lui-même. Cette sonde est animée par des moyens de déplacement (non représentés) et elle est prévue pour prélever du sang dans un tube d'échantillon (non représenté) et déposer ensuite une goutte de sang 38 (figures 2 et 5) sur la lame neuve 18 qui vient d'être déposée sur le chariot 23. Sur le chariot 23, la lame 18 est maintenue entre une butée fixe 40 et une pince basculante 42, encore appelée clip.

Le dépôt de la goutte de sang s'effectue au moyen de la sonde 36 en un emplacement prédéfini de la lame, qui est maintenue bloquée, le chariot 23 étant immobilisé en translation. Le volume de la goutte de sang est prédéfini et peut être ajusté par l'utilisateur.

Le chariot 23 est déplaçable en translation horizontale, suivant une direction de translation DT (figures 2 et 5) qui est perpendiculaire à la direction d'extraction DE. Le déplacement en translation du chariot s'effectue par l'intermédiaire de moyens moteurs appropriés, par exemple par une courroie 44 représentée de façon schématique sur la figure 5.

Comme on peut le voir sur la figure 2, la lame 18 comporte une zone réservée 46 de forme générale rectangulaire qui est prévue à une extrémité de la lame 18, et le dépôt de la goutte de sang 38 s'effectue sur la lame, à proximité de cette zone réservée.

Les moyens moteurs déplacent ensuite le chariot 23 vers un poste 48, dit "poste d'étalement" (figure 2) qui est prévu pour étaler la goutte de sang et former ainsi un étalement 50. Le poste d'étalement 48 est situé sur le trajet du chariot 23 assurant le transfert de la lame.

Le poste d'étalement 48 (figure 6) comprend un organe de mesure propre à mesurer la transmission optique de la goutte de sang 38 déposée sur la lame. Cet organe de mesure comprend une diode électro-luminescente 52 et une photo-diode 54 disposées de part et d'autre de la lame 18 à l'emplacement de la goutte de sang 38. En l'espèce, la diode électro-luminescente 52 est disposée du côté de la face supérieure 56 de la lame, qui reçoit la goutte de sang. Dans l'exemple, la diode électro-luminescente émet à 560 nm.

On en déduit une valeur mesurée de la transmission optique (TO), qui est fonction de l'épaisseur de la goutte et de son contenu. Il a été montré par des essais que cette mesure est inversement proportionnelle à l'hématocrite du sang considéré. A partir de la mesure ainsi obtenue, on ajuste la vitesse de l'étalement sanguin et donc son épaisseur.

Ainsi, un échantillon de sang contenant beaucoup de cellules, donc à hématocrite élevé, donnera une mesure de TO faible, générant une vitesse d'étalement élevée. Inversement, un échantillon faible en hématocrite donnera une mesure de TO forte et une vitesse lente d'étalement.

A partir de cette mesure, on peut donc contrôler la vitesse de l'étalement de façon précise et obtenir une uniformité de répartition des cellules sur la lame, et ce quelle que soit la quantité de cellules présentes dans l'échantillon de sang.

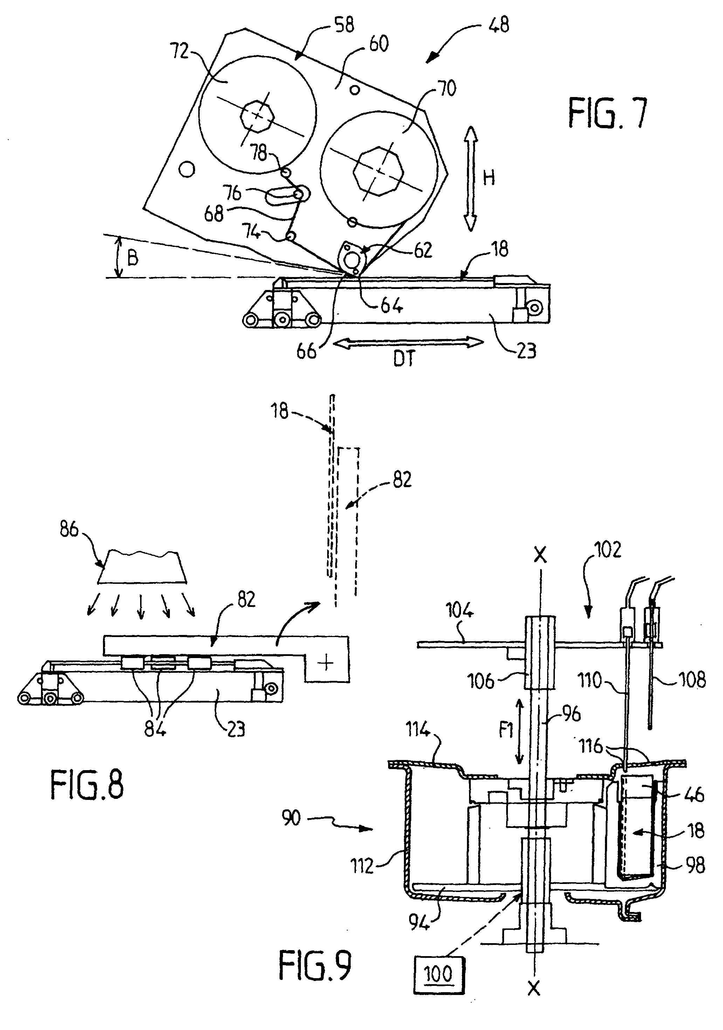

Cette mesure étant effectuée, on réalise l'étalement au niveau du poste d'étalement 48 par un outil 58 représenté sur la figure 7. L'outil 58 comprend un support fixe 60 portant une contre-forme 62 destinée à réaliser l'étalement par un déplacement relatif entre la contre-forme 62 et la lame 18 portée par le chariot 23. Dans l'exemple, c'est le déplacement de la lame 18, par l'intermédiaire du chariot 23, dans la direction de translation DT qui provoque l'étalement. La contre-forme 62 reste dans une position fixe, si ce n'est que le support 60 peut être réglé en hauteur comme représenté par la flèche H. Par ailleurs, comme on peut le voir, la contre-forme 62 présente une arête 64 qui se raccorde à un bord 66 lequel forme un angle réglable B avec la face supérieure 56 de la lame. Cet angle réglable B peut être modifié à la demande pour ajuster l'épaisseur de l'étalement. Généralement, l'angle B est de l'ordre de 30°.

Comme on peut le voir sur la figure 7, la contre-forme 62 ne vient pas directement au contact de la goutte de sang. Pour cela, le dispositif de l'invention comprend un ruban souple 68 en matière plastique, par exemple en polyéthylène, qui est tendu autour de la contre-forme 62 de manière à recouvrir complètement l'arête 64 et le bord 66 de la contre-forme. L'outil 60 comprend des moyens d'enroulement et de déroulement du ruban 68. Ces moyens comprennent une première bobine 70 (bobine dévideuse) de laquelle se déroule le ruban neuf et une deuxième bobine 72 (bobine enrouleuse) sur laquelle s'enroule le ruban souillé par le sang. Entre son passage autour de la contre-forme et son enroulement autour de la bobine 72, le ruban passe autour de galets de renvois 74, 76 et 78.

La partie du ruban en contact avec le sang est déplacée entre deux étalements successifs de façon à offrir une portion de ruban vierge pour l'étalement suivant, et éviter ainsi tout risque de contamination.

Avantageusement, les bobines 70 et 72 sont incluses dans une cassette qui est à changer, une fois le ruban complètement consommé.

La lame 18 portant l'étalement 50 est ensuite transférée, toujours par le chariot 23, à un poste de marquage 79 (figure 2), lequel comprend une tête de marquage qui peut être constitué par exemple par une tête d'impression, du type matrice à aiguilles, avec ruban encreur. Le marquage de la lame s'effectue sur la zone réservée 46 décrite précédemment. Cette zone doit être dépolie ou pré-peinte afin d'autoriser une bonne tenue des encres d'impression.

Il est à noter que, dans une variante de réalisation, le marquage pourrait s'effectuer d'une autre manière, par exemple par un ruban ou autre moyen d'impression qui serait placé au niveau du poste d'étalement décrit précédemment.

Une fois le marquage réalisé, le chariot 23 transfère la lame 18 vers un poste 80 qui est un poste de séchage et de basculement (figures 1 et 8). Le chariot dépose la lame au poste 80 et celle-ci se trouve reçue par un basculeur 82, ce qui permet au chariot vide de retourner vers le poste de dépôt pour accueillir une lame suivante.

La lame est portée par le basculeur 82 par l'intermédiaire de molettes 84, avantageusement au nombre de trois, réalisées en polymère. La lame est alors soumise à un flux d'air tiède, maintenu à 40°C environ, envoyé par un pulseur 86. Le basculeur 82 (figures 2 et 8) bascule ensuite la lame de 90° pour l'amener dans une position verticale (représentée en trait interrompu sur la figure 8) dans laquelle la zone réservée 46 de la lame se trouve disposée vers le haut.

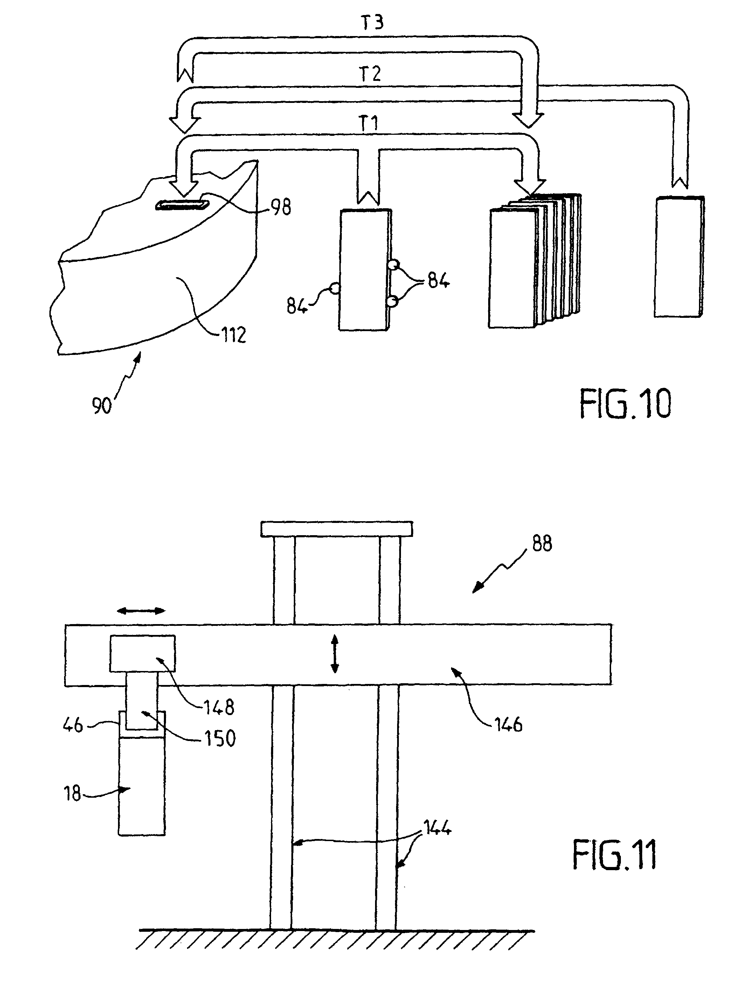

La lame ainsi amenée en position verticale peut être ensuite prise en charge par une potence de manutention 88 (figure 2) qui sera décrite en détail plus loin en référence aux figures 10 et 11. Cette potence permet notamment de transférer la lame vers un poste de coloration 90 et ensuite vers un poste de sortie 92.

Le poste de coloration 90 (figure 9) comprend un plateau tournant 94 monté rotatif autour d'un arbre 96 d'axe vertical XX. Ce plateau supporte une pluralité de réceptacles 98 appelés "puits", répartis circonférentiellement et qui, dans l'exemple représenté, sont au nombre de trente deux. Ces puits sont disposés verticalement et ont des dimensions adaptées à celles des lames. Le plateau tournant 94 est assujetti à un moyen moteur 100 représenté schématiquement sur la figure 9 propre à l'entraîner en rotation par incréments successifs de manière à amener les puits, de manière séquentielle, en différentes positions. Ainsi, le plateau tournant peut effectuer une rotation angulaire de puits en puits de manière séquentielle, par exemple toutes les 30 secondes. Au départ, un puits vide se trouve placé au droit de la potence 88 pour recevoir une lame.

La lame va ensuite subir au moins une opération, dans chaque position séquentielle du plateau tournant.

Pour cela, le poste de coloration comprend en outre des moyens de remplissage et de vidange 102 qui comprennent un support 104 déplaçable en translation verticale parallèlement à l'axe de rotation du plateau tournant. Dans l'exemple, le support 104 comporte un fût 106 propre à coulisser le long de l'arbre 96 comme montré par la flèche F1. Le support 104 porte deux aiguilles plongeuses, disposées verticalement, à savoir une aiguille d'injection 108 et une aiguille de vidange 110. Le support 104 est déplaçable entre une position haute où les aiguilles sont sorties du puits 98 (comme montré en trait plein sur la figure 9) et une position basse où les aiguilles sont plongées dans le puits. La position des aiguilles détermine le temps d'incubation, si bien que ces aiguilles sont déplacées en fonction des protocoles de coloration choisis.

Comme on peut le voir sur la figure 9, dans la position où la lame 18 est reçue dans le puits 98, la zone réservée 46 de la lame qui porte les moyens d'identification se trouve disposée en partie supérieure de manière à sortir du liquide contenu dans le puits.

Le poste de coloration comprend en outre une enceinte close comportant un fond 112 et un couvercle 114 qui entoure complètement le plateau tournant 94 et les puits 98 qu'il contient, de manière à empêcher la migration de vapeurs toxiques provenant des réactifs ou solvants injectés dans les puits. Le couvercle 114 est traversé par des trous 116 pour permettre le passage des aiguilles.

Les lames installées dans les puits sont successivement immergées de colorant et d'autres liquides de traitement afin de réaliser l'une des colorations nécessaires à la lecture d'une lame, selon les méthodes connues de MAY-GRÜNWALD GIEMSA, WRIGHT & WRIGHT GIEMSA.

Le dispositif 10 comporte un logement 118 (figure 1) pour recevoir des flacons contenant différents liquides susceptibles d'être injectés dans les puits puis ensuite vidangés.

Dans l'exemple, on prévoit un flacon 120 pour contenir un solvant (ici du méthanol) et deux flacons 122 et 124 pour contenir respectivement deux colorants différents.

Il est à noter que le dispositif 12, auquel est combiné le dispositif 10 de l'invention, comporte des logements pour recevoir d'autres réactifs 126, 128, 130 et 132 (figure 2).

Après un tour complet, la lame, qui a été ainsi traitée, se retrouve à son emplacement d'origine, c'est-à-dire à nouveau au droit de la potence 88.

Le poste de sortie comprend un réceptacle 134 (figures 1 et 2) susceptible de recevoir des paniers vides 136 superposés en pile. Ces paniers sont ensuite déplacés un par un dans un couloir 138 dans la direction de la flèche F2 (figures 1 et 2). Chacun des paniers comprend, dans l'exemple, vingt logements pouvant recevoir chacun une lame en position verticale, qui a été amenée par la potence de manutention. Un dispositif mécanique d'avance (non représenté) permet de faire avancer les paniers par incréments successifs pour positionner successivement chaque logement d'un panier sous la potence de manutention et recevoir à chaque fois une lame préalablement traitée. Les paniers une fois remplis, sont ensuite stockés dans une zone de stockage 140 avant d'être récupérés par l'opérateur.

Par ailleurs, le dispositif 10 comprend un réceptacle 142 pour le stockage de lames étalées manuellement, qui sont à colorer. En effet, il est nécessaire dans certains cas de colorer des lames déjà pourvues d'un étalement manuel de sang. Ce réceptacle 142 se situe également au droit de la potence, laquelle permet de prélever ainsi une lame du réceptacle 142 pour l'amener directement au plateau de coloration. La lame une fois colorée est ensuite déplacée et amenée dans un panier.

La figure 10 montre schématiquement les différentes possibilités offertes par la potence de manutention, à savoir : trajet T1 pour amener une lame munie d'un étalement vers le plateau colorateur ou dans un panier de la zone de stockage, selon que la coloration est demandée ou non pour cette lame. Elle permet aussi de réaliser un trajet T2 pour amener, comme décrit précédemment, une lame étalée extérieurement du réceptacle 142 au plateau de coloration et un trajet T3 pour déplacer une lame du plateau de coloration vers un panier dans la zone de stockage.

On se réfère maintenant à la figure 11 pour décrire la structure générale de la potence 88. Celle-ci comprend un support fixe 144 composé de deux colonnes verticales formant moyens de guidage, une poutre horizontale 146 déplaçable verticalement par rapport au support fixe, un coulisseau 148 déplaçable en translation le long de la poutre et une pince commandée 150 propre à saisir une lame et à la relâcher ensuite, pour la déplacer d'un poste à un autre.

Des moyens moteurs appropriés (non représentés) permettent de déplacer la poutre 146 et le coulisseau 148, si bien que la pince 150 peut occuper différentes positions dans un plan vertical. La pince 150 peut être actionnée par tout moyen approprié, par exemple par un électro-aimant. Il est à remarquer que la pince agit sur la zone réservée 46 de la lame.

Ainsi, le dispositif de l'invention permet de réaliser des étalements sanguins dans des conditions automatiques avec un maximum de sécurité.

## Revendications

1. Dispositif pour la préparation automatique d'étalements sanguins sur des lames,
**caractérisé en ce qu'**il comprend :
- un poste de stockage (16) pour stocker des lames neuves (18) disposées horizontalement et superposées en une pile verticale ;
- un organe extracteur (22) propre à extraire une lame de la pile et comprenant un poussoir (24) déplaçable dans une direction d'extraction choisie (DE) et propre à agir sur la lame (18) se situant en bas de la pile en vue de son transfert vers un poste de dépôt (34), le poussoir (24) étant réalisé sous la forme d'un couteau propre à agir sur un bord longitudinal (28) de la lame de sorte que ledit bord fasse un angle aigu (A) par rapport à la normale (N) à la direction d'extraction (DE), ledit angle aigu (A) ayant avantageusement une valeur comprise entre 1 et 30° ;
- un poste de dépôt (34) propre à déposer une goutte de sang (38) sur une lame (18) extraite de la pile ;
- un poste d'étalement (48) propre à étaler la goutte de sang (38) dans des conditions contrôlées pour produire un étalement sanguin (50) de répartition uniforme ;
- un poste de marquage (79) comportant une tête de marquage propre à apposer des moyens d'identification sur une zone réservée (46) de la lame;
- un poste de séchage (80) propre à sécher l'étalement sanguin ;
- un poste de coloration (90) propre à colorer l'étalement sanguin (50) ;
- un poste de sortie (92) pour évacuer la lame ainsi colorée ; et
- des moyens de transfert (23 ; 82 ; 88) propres à déplacer la lame entre les postes précités selon un trajet défini.

2. Dispositif selon la revendication 1, **caractérisé en ce que** le poste d'étalement (48) comprend une contre-forme (62) propre à être appliquée contre la face de la lame sur laquelle la goutte de sang (38) a été déposée en formant un angle pré-réglé (B), et des moyens pour imposer un déplacement relatif en translation entre la lame et la contre-forme afin de produire un étalement sanguin (50) d'épaisseur contrôlée, et **en ce que** la contre-forme (62) est revêtue d'un ruban souple (68) en matière plastique, supporté par des moyens d'enroulement et de déroulement (70, 72), en sorte que le ruban (68) présente une partie en contact avec le sang qui est déplacé entre deux étalements successifs.

3. Dispositif selon la revendication 2, **caractérisé en ce que** les moyens d'enroulement et de déroulement comprennent une première bobine (70) de laquelle se déroule le ruban neuf et une deuxième bobine (72) sur laquelle s'enroule le ruban souillé par le sang, les dites bobines étant de préférence contenues dans une cassette.

4. Dispositif selon l'une des revendications 1 à 3, **caractérisé en ce que** le poste d'étalement (48) comprend un organe de mesure (52, 54) propre à mesurer la transmission optique (To) de la goutte de sang (38) déposée sur la lame afin de déduire une valeur mesurée, utilisable pour ajuster la vitesse de l'étalement, et donc son épaisseur.

5. Dispositif selon la revendication 4, **caractérisé en ce que** l'organe de mesure comprend une diode électro-luminescente (52) et une photo-diode (54) disposées de part et d'autre de la lame (18) à l'emplacement de la goutte de sang (38).

6. Dispositif selon l'une des revendications 1 à 5, **caractérisé en ce que** le poste de coloration (90) comprend un plateau tournant (94) monté rotatif autour d'un axe vertical (XX) et muni d'une pluralité de puits (98) répartis en circonférence et propres à recevoir chacun une lame en position verticale, des moyens propres à assurer une rotation angulaire du plateau de puits en puits de manière séquentielle, ainsi que des moyens de remplissage et de vidange (102) pour remplir un puits (98) d'un liquide de traitement et le vider ensuite de son contenu.

7. Dispositif selon la revendication 6, **caractérisé en ce que** les moyens de remplissage et de vidange (102) comprennent au moins deux aiguilles plongeuses (108, 110) portées par un support (104) déplaçable en translation, parallèlement à l'axe de rotation (XX) du plateau tournant (64), entre une position haute où les aiguilles (108, 110) sont sorties du puits (98) et une position basse où les aiguilles (108, 110) sont plongées dans le puits (98).

8. Dispositif selon la revendication 6, **caractérisé en ce que**, dans la position où une lame (18) est reçue dans un puits (98), les moyens d'identification de la lame sont disposés en partie supérieure de manière à sortir du liquide contenu dans le puits.

9. Dispositif selon l'une des revendications 6 à 8, **caractérisé en ce que** le poste de coloration (98) comprend une enceinte close (112, 114) contenant le plateau tournant (94) et les puits (98).

10. Dispositif selon l'une des revendications 1 à 9, **caractérisé en ce que** le poste de sortie (92) comprend des moyens de stockage et de déplacement propres à stocker et faire avancer des paniers vides (136) susceptibles de recevoir des lames en sortie du poste de coloration.

11. Dispositif selon l'une des revendications 1 à 10, **caractérisé en ce que** les moyens de transfert comprennent un chariot (23) propre à déplacer les lames (18) une par une en position horizontale depuis le poste de stockage (16) jusqu'au poste de séchage (80).

12. Dispositif selon la revendication 11, **caractérisé en ce que** les moyens de transfert comprennent en outre un basculeur (82) placé près du poste de séchage et propre à amener la lame (18) en position verticale.

13. Dispositif selon l'une des revendications 11 et 12, **caractérisé en ce que** les moyens de transfert comprennent en outre une potence de manutention (88) propre à déplacer une lame (18) en position verticale entre le poste de séchage, le poste de coloration et le poste de sortie, la potence comprenant un support fixe (144), une poutre horizontale (146) déplaçable verticalement par rapport au support fixe, un coulisseau (148) déplaçable en translation le long de la poutre, et une pince commandée (150) propre à saisir une lame (18) et à la relâcher, pour la déplacer d'un poste à un autre.

## Patentansprüche

1. Vorrichtung zur automatischen Vorbereitung von Blutabstrichen auf Objektträgern,
**dadurch gekennzeichnet, dass** sie umfasst:
- eine Vorhaltestation (16) zum Vorhalten neuer Objektträger (18), die horizontal und in einem vertikalen Stapel übereinander angeordnet sind;
- ein Entnahmeelement (22), das dazu ausgelegt ist, einen Objektträger aus dem Stapel zu entnehmen, und das einen Schieber (24) umfasst, der in einer ausgewählten Entnahmerichtung (DE) verschiebbar und dazu ausgelegt ist, auf den Objektträger (18) zu wirken, der sich im Hinblick auf seine Überführung zu einer Auftragestation (34) unten im Stapel befindet, wobei der Schieber (24) in der Form eines Messers ausgebildet ist, das dazu ausgelegt ist, so auf einen Längsrand (28) des Objektträgers zu wirken, dass dieser Rand einen spitzen Winkel (A) bezüglich der Normalen (N) zur Entnahmerichtung (DE) bildet, wobei der spitze Winkel (A) vorzugsweise zwischen 1° und 30° beträgt;
- eine Auftragestation (34), die dazu ausgelegt ist, einen Bluttropfen (38) auf einen aus dem Stapel entnommenen Objektträger (18) aufzutragen;
- eine Abstrichstation (48), die dazu ausgelegt ist, den Bluttropfen (38) unter kontrollierten Bedingungen abzustreichen, um eine gleichmäßig abgestrichene Blutverteilung (50) herzustellen;
- eine Markierungsstation (79) mit einem Markierungskopf, der dazu ausgelegt ist, Kennzeichnungseinrichtungen auf einem dafür freigehaltenen Bereich (46) des Objektträgers anzubringen;
- eine Trocknungsstation (80), die dazu ausgelegt ist, den Blutabstrich zu trocknen;
- eine Färbestation (90), die dazu ausgelegt ist, den Blutabstrich (50) zu färben;
- eine Austragstation (92), um den auf diese Weise gefärbten Objektträger auszutragen; und
- Transporteinrichtungen (23; 82; 88), die dazu ausgelegt sind, den Objektträger entlang eines bestimmten Wegs zwischen den vorgenannten Stationen zu transportieren.

2. Vorrichtung nach Anspruch 1,
**dadurch gekennzeichnet dass**,
die Abstrichstation (48) eine Gegenform (62) umfasst, die dazu ausgelegt ist, unter Bildung eines voreingestellten Winkels (B) an die Fläche des Objektträgers, auf dem der Bluttropfen (38) aufgetragen wurde, angelegt zu werden, und Einrichtungen, um eine translatorische Relativbewegung zwischen dem Objektträger und der Gegenform hervorzurufen, um einen Blutabstrich (50) mit einer kontrollierten Dicke herzustellen, und **dass** die Gegenform (62) mit einem nachgiebigen Band (68) aus Kunststoff überzogen ist, das von Auf- und Abwickeleinrichtungen (70, 72) gehaltert ist, so dass das Band (68) einen das Blut kontaktierenden Teil aufweist, der zwischen zwei aufeinanderfolgenden Abstrichen verschoben wird.

3. Vorrichtung nach Anspruch 2,
**dadurch gekennzeichnet dass**,
die Auf- und Abwickeleinrichtungen eine erste Spule (70) umfassen, von der das neue Band abgewickelt wird, und eine zweite Spule (72), auf die das vom Blut verschmutzte Band aufgerollt wird, wobei die Spulen vorzugsweise in einer Kassette enthalten sind.

4. Vorrichtung nach einem der Ansprüche 1 bis 3,
**dadurch gekennzeichnet, dass**
die Abstrichstation (48) eine Messeinrichtung (52, 54), umfasst, die dazu ausgelegt ist, die optische Übertragung (To) des auf den Objektträger aufgetragenen Bluttropfens (38) zu messen, um einen Messwert abzuleiten, der dazu verwendet werden kann, um die Abstrichgeschwindigkeit und somit seine Dicke einzustellen.

5. Vorrichtung nach Anspruch 4,
**dadurch gekennzeichnet, dass**
die Messeinrichtung eine Elektrolumineszenzdiode (52) und eine Photodiode (54) umfasst, die beidseits des Objektträgers (18) an der Stelle angeordnet sind, an der sich der Bluttropfen (38) befindet.

6. Vorrichtung nach einem der Ansprüche 1 bis 5,
**dadurch gekennzeichnet, dass**
- die Färbestation (90) folgendes umfasst:
- einen Drehteller (94), der drehbeweglich um eine vertikale Achse (XX) angebracht und mit mehreren Schächten (98) ausgestattet ist, die am Umfang verteilt und dazu ausgelegt sind, jeweils einen Objektträger in vertikaler Position aufzunehmen,
- Einrichtungen, die dazu ausgelegt sind, um eine Winkeldrehung des Tellers von Schacht zu Schacht aufeinanderfolgend sicherzustellen, sowie
- Befüll- und Entleerungseinrichtungen (102), um einen Schacht (98) mit einer Behandlungsflüssigkeit zu befüllen und danach seinen Inhalt zu entleeren.

7. Vorrichtung nach Anspruch 6,
**dadurch gekennzeichnet, dass**
die Befüll- und Entleerungseinrichtungen (102) mindestens zwei Tauchnadeln (108, 110) umfassen, die von einer Halterung (104) getragen werden, die transtatorisch parallel zur Rotationsachse (XX) des Drehtellers (64) zwischen einer hohen Stellung, in der die Nadeln (108, 110) aus dem Schacht (98) ausgetreten und einer tiefen Stellung, in der die Nadeln (108, 110) in den Schacht (98) eingetaucht sind, verschiebbar sind.

8. Vorrichtung nach Anspruch 6,
**dadurch gekennzeichnet, dass**
in der Stellung, in der ein Objektträger (18) in einem Schacht (98) aufgenommen ist, die Kennzeichnungseinrichtungen des Objektträgers am oberen Teil angeordnet sind, so dass sie aus der im Schacht enthaltenen Flüssigkeit herausstehen.

9. Vorrichtung nach einem der Ansprüche 6 bis 8,
**dadurch gekennzeichnet, dass**
die Färbestation (98) einen geschlossenen Raum (112, 114) umfasst, der den Drehteller (94) und die Schächte (98) enthält.

10. Vorrichtung nach einem der Ansprüche 1 bis 9,
**dadurch gekennzeichnet, dass**
die Austragstation (92) Vorhalte- und Vorschubeinrichtungen umfasst, die dazu ausgelegt sind, leere Kästen (136) vorzuhalten und vorrücken zu lassen, welche die aus der Färbestation austretenden Objektträger aufnehmen können.

11. Vorrichtung nach einem der Ansprüche 1 bis 10,
**dadurch gekennzeichnet, dass**
die Transporteinrichtungen einen Wagen (23) umfassen, der dazu ausgelegt ist, die Objektträger (18) nacheinander einzeln in einer horizontalen Stellung von der Vorhaltestation (16) zur Trocknungsstation (80) zu transportieren.

12. Vorrichtung nach Anspruch 11,
**dadurch gekennzeichnet, dass**
die Transporteinrichtungen darüber hinaus nahe an der Trocknungsstation angeordnet eine Kippvorrichtung (82) umfassen, die dazu ausgelegt ist, den Objektträger (18) in eine vertikale Position zu bringen.

13. Vorrichtung nach einem der Ansprüche 11 und 12,
**dadurch gekennzeichnet, dass**
die Transporteinrichtungen darüber hinaus einen Förderarm (88) umfassen, der dazu ausgelegt ist, einen Objektträger (18) in vertikaler Stellung zwischen der Trocknungsstation, der Färbestation und der Austragstation zu transportieren, wobei der Arm eine feststehende Halterung (144), einen vertikal zur feststehenden Halterung verschiebbaren horizontalen Träger (146), einen translatorisch entlang des Trägers verschiebbaren Schlitten (148) und eine gesteuerte Greifvorrichtung (150) umfasst, die dazu ausgelegt ist, einen Objektträger (18), zu ergreifen und wieder loszulassen, um ihn von einer Station zu einer anderen zu verlagern.

## Claims

1. Device for the automatic preparation of blood smears on slides,
**characterized in that** it comprises:
- a storage station (16) for storing new slides (18) placed horizontally and superimposed in a vertical stack;
- an extracting component (22) suitable for extracting one slide from the stack and comprising a pusher (24) which can be moved in a chosen extraction direction (DE) and suitable for acting on the slide (18) located at the bottom of the stack for the purpose of transferring it towards a coating station (34), the pusher (24) being made in the form of a blade suitable for acting on a longitudinal edge (28) of the slide such that the said edge makes an acute angle (A) with respect to the normal (N) to the extraction direction (DE), the said acute angle (A) advantageously having a value of between 1 and 30°;
- a coating station (34) suitable for depositing a drop of blood (38) on a slide (18) extracted from the stack;
- a smearing station (48) suitable for smearing the drop of blood (38) under controlled conditions in order to produce a blood smear (50) with uniform distribution;
- a marking station (79) comprising a marking head suitable for affixing identification means to a reserved region (46) of the slide;
- a drying station (80) suitable for drying the blood smear;
- a staining station (90) suitable for staining the blood smear (50);
- an output station (92) for removing the slide stained in this way; and
- transfer means (23; 82; 88) suitable for moving the slide between the aforementioned stations according to a predefined path.

2. Device according to Claim 1, **characterized in that** the smearing station (48) comprises a counter-form (62) suitable for being pressed against the face of the slide on which the drop of blood (38) has been deposited, thereby forming a preset angle (B), and means for imposing a relative translational movement between the slide and the counter-form in order to produce a blood smear (50) of controlled thickness, and **in that** the counter-form (62) is covered with a flexible plastic ribbon (68), supported by winding and unwinding means (70, 72), such that the ribbon (68) has a part in contact with the blood which is moved between two successive smearing operations.

3. Device according to Claim 2, **characterized in that** the winding and unwinding means comprise a first reel (70) from which the new ribbon unwinds and a second coil (72) onto which the blood-soiled ribbon winds, the said reels preferably being contained in a cassette.

4. Device according to one of Claims 1 to 3, **characterized in that** the smearing station (48) comprises a measuring component (52, 54) suitable for measuring the optical transmission (To) of the drop of blood (38) deposited on the slide so as to calculate a measured value therefrom which can be used in order to adjust the smear speed, and therefore the smear thickness.

5. Device according to Claim 4, **characterized in that** the measuring component comprises a light-emitting diode (52) and a photodiode (54) placed on either side of the slide (18) at the location of the drop of blood (38).

6. Device according to one of Claims 1 to 5, **characterized in that** the staining station (90) comprises a rotating plate (94) mounted so that it can rotate about a vertical axis (XX) and provided with a plurality of wells (98) distributed around the circumference and each one suitable for accommodating a slide in the vertical position, means suitable for providing angular rotation of the plate from well to well in a sequential manner, and filling and emptying means (102) for filling a well (98) with a treatment liquid and then emptying it of its contents.

7. Device according to Claim 6, **characterized in that** the filling and emptying means (102) comprise at least two dipping needles (108, 110) carried by a support (104) which can be moved translationally, parallel to the axis of rotation (XX) of the rotating plate (64), between a high position where the needles (108, 110) are out of the well (98) and a low position where the needles (108, 110) are dipped in the well (98).

8. Device according to Claim 6, **characterized in that**, in the position where a slide (18) is accommodated in a well (98), the means of identifying the slide are placed in the upper part so as to be out of the liquid contained in the well.

9. Device according to one of Claims 6 to 8, **characterized in that** the staining station (90) comprises a closed chamber (112, 114) containing the rotating plate (94) and the wells (98).

10. Device according to one of Claims 1 to 9, **characterized in that** the output station (92) comprises storage and movement means suitable for storing and advancing empty racks (136) capable of receiving slides coming out of the staining station.

11. Device according to one of Claims 1 to 10, **characterized in that** the transfer means comprise a carriage (23) suitable for moving the slides (18) one by one in a horizontal position from the storage station (16) to the drying station (80).

12. Device according to Claim 11, **characterized in that** the transfer means further comprise a tipper (82) placed close to the drying station and suitable for bringing the slide (18) into the vertical position.

13. Device according to either of Claims 11 and 12, **characterized in that** the transfer means further comprise a holding bracket (88) suitable for moving a slide (18) in the vertical position between the drying station, the staining station and the output station, the bracket comprising a fixed support (144), a horizontal beam (146) which can be moved vertically with respect to the fixed support, a slider (148) which can be moved translationally along the beam, and a controlled clamp (150) suitable for grasping a slide (18) and for releasing it, in order to move it from one station to another.
